# EUROPEAN PATENT APPLICATION

(11) **EP 1 139 337 A1**
(43) Date of publication of application: **04.10.2001**
(21) Application number: 00610030.9
(22) Date of filing: 31.03.2000
(51) Int. Cl.: G10L 21/02, G10L 19/00, H04M 1/19

(54) **A method of transmitting voice information and an electronic communications device for transmission of voice information**

(71) Applicant: Telefonaktiebolaget L M Ericsson (Publ), 126 25 Stockholm (SE)
(72) Inventor: Gustafsson, Harald, 223 63 Lund (SE); Lindgren, Ulf, 226 49 Lund (SE); Claesson, Ingvar, 240 10 Dalby (SE); Dahl, Mattias, 222 22 Lund (SE)
(74) Representative: Boesen, Johnny Peder

(57) **Abstract**

A method of transmitting voice information from an electronic communications device (1) comprises the steps of receiving the voice information from the environment of the device together with a first background sound, generating a sound signal having a first signal part representing the voice information and a second signal part representing the first background sound, reducing the signal part representing the first background sound, and transmitting the sound signal through a communications channel to which the device is connected. The method further comprises the step of adding to the sound signal an additional signal representing a second background sound. In this way background noise can be removed, while a natural and comfortable conversation can be maintained without revealing the location of the user of the device.

## Description

The invention relates to a method of transmitting voice information from an electronic communications device, said method comprising the steps of receiving said voice information from the environment of the device together with a first background sound; generating a sound signal having a first signal part representing the voice information and a second signal part representing the first background sound; reducing the signal part representing the first background sound; and transmitting said sound signal through a communications channel to which the device is connected. The invention further relates to an electronic communications device for transmission of voice information.

Electronic communications devices, such as e.g. mobile telephones, are used in all kinds of environments. Some of these environments are very noisy and they can be very disturbing for e.g. a telephone conversation, since the background noise is transmitted together with the user's voice to the other party of the conversation, who will experience difficulties in distinguishing the voice from the background noise. Examples of disturbing environments are surrounding traffic, production facilities or shouting people in public places, such as bars, conference rooms, etc.

Further to the poor intelligibility mentioned above, another disadvantage of the background noise is that it may reveal the location of the user to his conversation partner, which is sometimes undesired.

Several methods of reducing the background noise in e.g. telephones are known. WO 92/17019 discloses a noise suppressing telephone handset provided with a second microphone in addition to the normal microphone. The second microphone is arranged in the vicinity of the receiver of the handset. The signal from the second microphone is inverted and fed back to the ordinary microphone, and thus the two microphones tend to outbalance the remote field, i.e. to reduce the background noise, while the speech, which is picked up mainly by the ordinary microphone, is only affected to an insignificant degree.

US 5 550 924 discloses another method of reducing background noise for speech enhancement. The method includes framing of the audio signal, transforming it to obtain spectrum components, estimating noise and suppressing it, delaying and attenuating the audio frames, and performing an inverse transformation of the signal back from the frequency domain to the time domain to give a frame of noise-reduced signal.

These and other methods of reducing background noise may be rather effective and today it is thus possible to substantially remove the background noise. However, it is not just a question of removing as much noise as possible. If all the noise is removed, the resulting noise free voice will sound artificial. Normally, there will always be a certain level of background sound in any conversation, and a person listening to a totally noise free conversation will find the listening very unnatural and uncomfortable. Further, the listening person will be aware that the background sound has been removed, and although he cannot identify the location of the other person, he will thus know that the other person is probably at a location which he did not want to reveal.

On the other hand, if the background sound is only reduced to a level which can be heard without disturbing the speech too much, the artificial or unnatural impression may well be avoided, but the remaining background sound will still reveal the location of the other person.

It is also known to produce an artificial background by e.g. letting a tape recorder replay sounds like office environment or natural sounds in e.g. a hotel room. However, this method only adds the additional sound to the already existing background sounds without affecting such already existing background sounds, and thus it can only be used at very quiet locations. If the method is used together with one of the above-mentioned noise reduction techniques, the replayed additional sound will be reduced like any other background sound.

Thus, it is an object of the invention to provide a method of the above-mentioned type in which background noise can be removed, while a natural and comfortable conversation can be maintained without revealing the location of the user of the device.

According to the invention, this is achieved in that the method further comprises the step of adding to said sound signal an additional signal representing a second background sound. By reducing the existing background sound and adding a second background sound as a replacement there will still be a background for the conversation, and thus the unnatural and uncomfortable impression of a total noise free conversation will be avoided. At the same time, the added background sound allows the user to pretend to be at a location different from the actual location.

When the step of adding an additional signal representing the second background sound is performed in the electronic communications device, as stated in claim 2, the user of the device will be able to control the activation of the function directly, and thus a very flexible and user-friendly method is provided. As stated in claim 3, the step of adding the additional signal may comprise replaying a pre-recorded background sound stored in the device. In this way the additional background sound can be used directly.

Alternatively, the step of adding an additional signal representing the second background sound may be performed in said communications channel, as stated in claim 4. In this way the method can be performed without the need of installing additional equipment in the device.

In an expedient embodiment, which is stated in claim 5, the signal part representing the first background sound is reduced to a level where the background sound is substantially removed. This will improve the effect of not revealing the user's location to a conversation partner.

As mentioned, the invention further relates to an electronic communications device for transmission of voice information, comprising transducer means for receiving the voice information from the environment of the device together with a first background sound, and for generating a sound signal comprising a first signal part representing the voice information and a second part representing the first background sound; means for reducing the signal part representing the first background sound; and means for transmitting the sound signal through a communications channel to which the device is connected. When it further comprises means for adding to said sound signal an additional signal representing a second background sound, a background noise can be removed, while a natural and comfortable conversation is maintained without revealing the location of the user of the device.

As stated in claim 7, the means for adding an additional signal may expediently comprise means for playback of audio signals, as this is an easy way of obtaining the additional signal.

As stated in claim 8, the device may further comprise means for storing a pre-recorded background sound in the device. This allows the user to have a selection of different background sounds ready in the device. When the device, as stated in claim 9, further comprises means for recording a background sound for storage in the device, the user may also use the device for creating his own selection of background sounds.

Alternatively, the device may further comprise means for downloading audio files through said communications channel, as stated in claim 10. This provides the user with a selection of background sounds which may be offered by different service providers. These downloaded sounds may be stored in the device like the pre-recorded sounds above, or the device may be adapted to download and play back the audio files on-line, as stated in claim 11.

As an alternative to just playing back a stored background sound, the device may be adapted to play back a smooth background sound and to add more distinct sounds at random instances, which is stated in claim 12. In this way it is ensured that exactly the same sound sequence is not repeated again and again.

As stated in claim 13, the device may further comprise means for selecting by a user, at the beginning of a call, whether said means for reducing the signal part representing the first background sound and said means for adding an additional signal are to be enabled during the call. This allows the user to decide whether the effect should be used or not in a given conversation. This decision may be taken, e.g. when the user sees the identity of a caller, or he can choose to use the effect only in very noisy surroundings.

As stated in claim 14, the device may alternatively be adapted to select automatically whether said means for reducing the signal part representing the first background sound and said means for adding an additional signal are to be enabled in dependence of parameters stored in the device. As an example this allows the effect to be used only at certain times of the day.

In an expedient embodiment of the invention, which is stated in claim 15, the device is a mobile telephone.

The invention will now be described more fully below with reference to the drawing, in which
figure 1 shows a device adapted to add an artificial background according to the invention,
figure 2 shows an example of how different backgrounds may be stored in the memory of the device of figure 1,
figure 3 shows a device in which a background may be pre-recorded by the user,
figure 4 shows how a background may be downloaded from e.g. the Internet, and
figure 5 shows how the artificial background may be added in a base station.

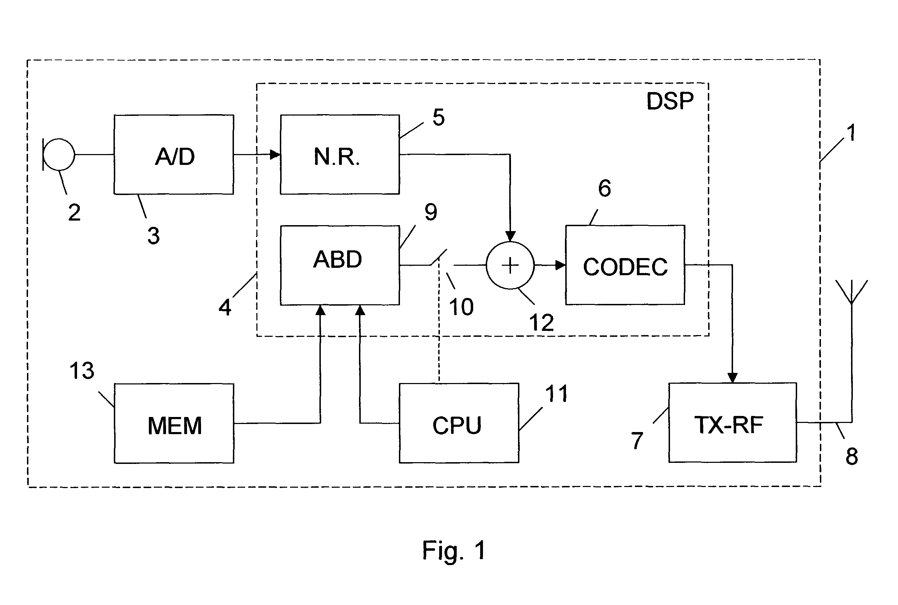

Figure 1 shows a device 1 in which the invention may be used. The device 1 could typically be a mobile telephone. Speech from a user is received by a microphone 2 and passed through an analog-to-digital converter 3 to a digital signal processor 4. In the case shown in figure 1 the signal processor 4 includes a noise reduction device 5. This device could be implemented in several well known ways and it will not be described in further detail here. The noise-reduced signal from the device 5 is input to the usual speech CODEC circuit 6 of the telephone, from which the signal is passed through a radio frequency transmitter circuit 7 to an antenna 8.

The noise reduction device 5 is used for reducing or removing unwanted background noise in the speech received by the microphone 2, because such noise may affect the intelligibility of the speech and reveal the location of the speaker to his conversation partner.

According to the invention the removed noise may be replaced by a different background sound which is generated in the artificial background device 9. The artificial background sound can be switched in and out by a switch 10. The artificial background device 9 and the switch 10 are both controlled by a central processor unit 11. The artificial background sound is added to the noise-reduced signal from the device 5 in the adding circuit 12.

The artificial background device 9 is adapted to replay a background sound stored in digital form, such as PCM, in a memory 13. The background sound may be pre-recorded at the factory producing the device 1 and stored in the memory 13 which could be a ROM memory in this case. When using the artificial background sound during a conversation the recording is played in a loop such that after a certain time the same sound will be repeated. The pre-recorded sound may also be a smooth background without any distinct sounds which is played in a loop in combination with distinct sounds which are then added to the smooth background at random instances. In this way it is ensured that the same sound is not repeated again and again. The memory 13 may comprise several different sounds such that the CPU 11 can select a specific sound in accordance with user instructions in dependence on the actual situation.

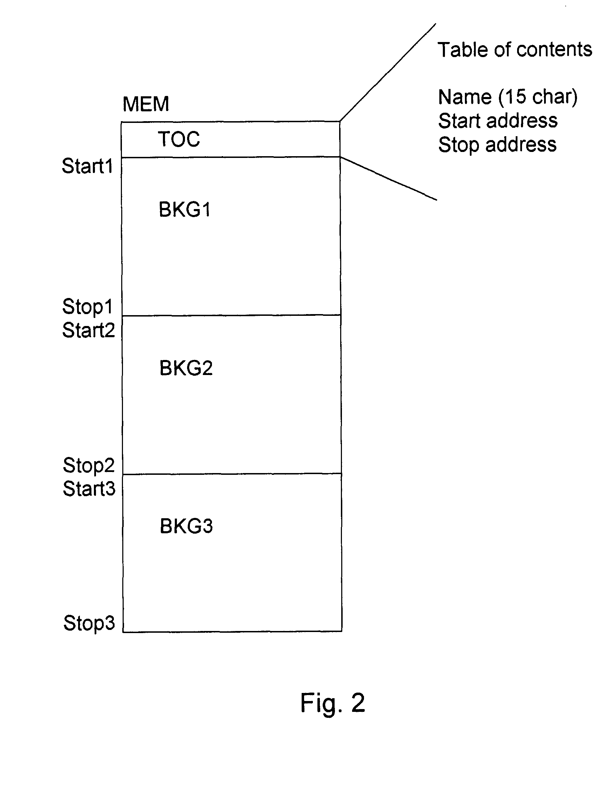

Figure 2 shows an example of how the different backgrounds may be stored in the memory 13. In this case three backgrounds (BKG1, BKG2, BKG3) are stored after each other together with a header information (TOC). The start and stop addresses are known by the CPU 11 so that the correct background can be selected.

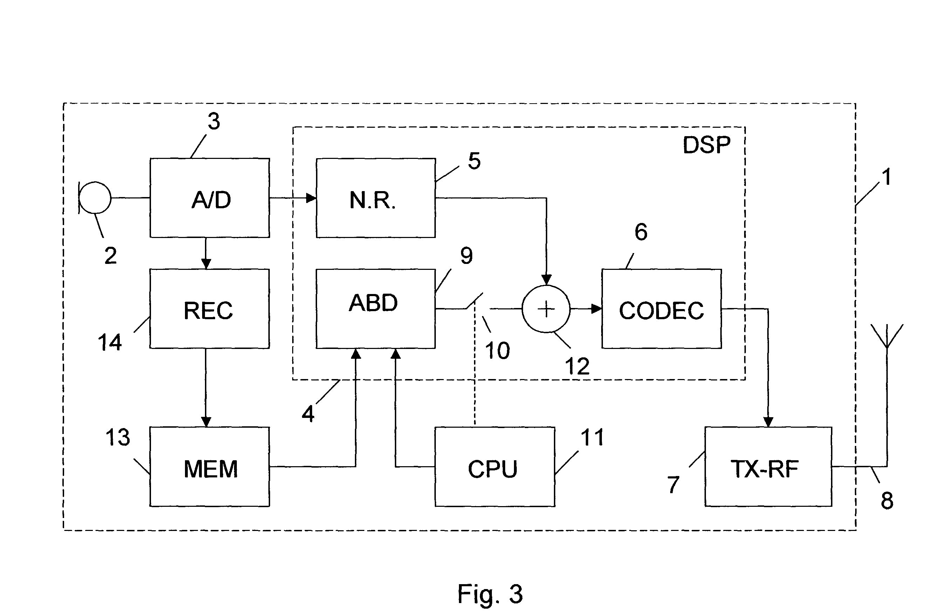

Alternatively, the background sound may be pre-recorded by the user and stored in the memory 13. This enables the user to create his own personalized background sounds. As shown in figure 3, during recording the sound is received by the microphone 2 and the signal from the microphone is passed through the A/D converter 3 to a recording device 14, from which the recording is stored in the memory 13 for later use.

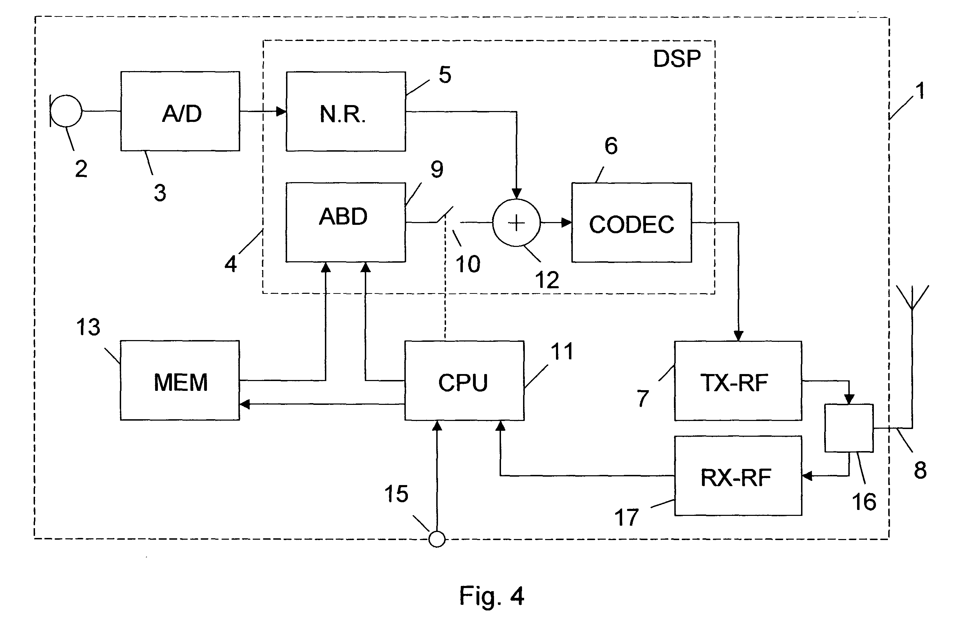

Another way of obtaining background sounds for storage in the memory is to get them from another recorded source. Figure 4 shows two different ways of doing that. One way is to transfer a recording from an external device, such as a PC, which can be connected to the port 15. The CPU 11 receives the recording and stores it in the memory 13. Another solution is to download the recordings e.g. through the Internet. In this case the signals are received through the antenna 8, the antenna switch 16 and the radio frequency receiver circuit 17, and again the recording is stored in the memory 13 by the CPU 11.

The decision of whether the artificial background sound is switched in or not could be made by the user. When answering a call, the user could, instead of just pressing e.g. a "yes" key, have the option of answering the call in an environment different from the actual environment. Instead of displaying a question such as "Answer?" the device could display questions like "Answer in Office Environment?" or "Answer in Real Environment?". By means of e.g. arrow keys one of the different environments could then be selected from a list before the "yes" button is pressed. Similarly, the user could select a suitable background before initiating a call from the device.

It is also possible to integrate more intelligence into the man machine interface of the device. The device can remember which environment is normally chosen for different phone calls, and even take into account at what time the call comes. As an example, all calls could be answered with the real environment during business hours, while business calls in the evening are answered with an artificial office background.

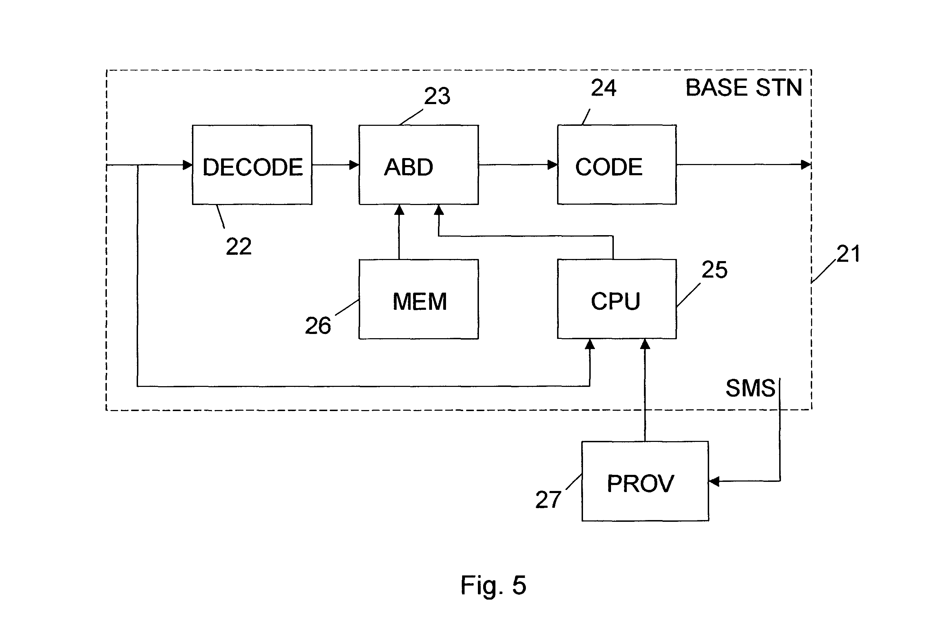

As an alternative to adding the artificial background in the device as described above, it may instead be added at a location in the communications channel used by the device. When the device is a mobile telephone, e.g. a GSM telephone, the background could be added in the base station communicating with the telephone. Figure 5 shows the structure of a base station 21 adapted for this possibility. Voice signals from a GSM telephone are decoded in the decoder 22, an artificial background is added in the artificial background device 23 and coded again in the encoder 24. Just as in figure 1 the artificial background device 23 is controlled from a CPU 25 and the backgrounds are stored in the memory 26.

The mobile station, i.e. the telephone, sends an SMS message (Short Message Service) to a provider or an operator 27. The sent message contains the IMEI code (International Mobile Equipment Identity) of the mobile station and the desired option, e.g. the background type. Alternatively, the mobile station could send the information to the provider 27 via another medium, such as the Internet, WAP or by regular mail. The provider then enables background substitution for the mobile station. This means that when the mobile station starts communication with the base station, it is identified by means of the IMEI code, and thus a background may be superimposed.

Although a preferred embodiment of the present invention has been described and shown, the invention is not restricted to it, but may also be embodied in other ways within the scope of the subject-matter defined in the following claims.

## Claims

1. A method of transmitting voice information from an electronic communications device (1), said method comprising the steps of
• receiving said voice information from the environment of the device together with a first background sound,
• generating a sound signal having a first signal part representing the voice information and a second signal part representing the first background sound,
• reducing the signal part representing the first background sound, and
• transmitting said sound signal through a communications channel to which the device is connected,
**characterized in that** the method further comprises the step of adding to said sound signal an additional signal representing a second background sound.

2. A method according to claim 1, **characterized in that** the step of adding an additional signal representing the second background sound is performed in said electronic communications device (1).

3. A method according to claim 1 or 2, **characterized in that** the step of adding the additional signal comprises replaying a pre-recorded background sound stored in the device (1).

4. A method according to claim 1, **characterized in that** the step of adding an additional signal representing the second background sound is performed in said communications channel.

5. A method according to claim 1, **characterized in that** the signal part representing the first background sound is reduced to a level where the background sound is substantially removed.

6. An electronic communications device (1) for transmission of voice information, comprising
• transducer means (2) for receiving the voice information from the environment of the device together with a first background sound, and for generating a sound signal comprising a first signal part representing the voice information and a second part representing the first background sound,
• means (5) for reducing the signal part representing the first background sound, and
• means (7, 8) for transmitting the sound signal through a communications channel to which the device is connected,
**characterized in that** it further comprises means (9, 10) for adding to said sound signal an additional signal representing a second background sound.

7. An electronic communications device according to claim 6, **characterized in that** the means (9, 10) for adding an additional signal comprises means for playback of audio signals.

8. An electronic communications device according to claim 7, **characterized in that** the device further comprises means (13) for storing a pre-recorded background sound in the device.

9. An electronic communications device according to claim 8, **characterized in that** the device further comprises means (14) for recording a background sound for storage in the device.

10. An electronic communications device according to claim 7, **characterized in that** the device further comprises means (17) for downloading audio files through said communications channel.

11. An electronic communications device according to claim 10, **characterized in that** the device is adapted to download and play back said audio files online.

12. An electronic communications device according to any one of claims 7-11, **characterized in that** the device is adapted to play back a smooth background sound and to add more distinct sounds at random instances.

13. An electronic communications device according to any one of claims 6-12, **characterized in that** the device further comprises means for selecting by a user, at the beginning of a call, whether said means for reducing the signal part representing the first background sound and said means for adding an additional signal are to be enabled during the call.

14. An electronic communications device according to any one of claims 6-12, **characterized in that** the device is adapted to select automatically whether said means for reducing the signal part representing the first background sound and said means for adding an additional signal are to be enabled in dependence on parameters stored in the device.

15. An electronic communications device according to any one of claims 6-14, **characterized in that** the device is a mobile telephone.
